# EUROPÄISCHE PATENTANMELDUNG

(11) **EP 1 980 185 A1**
(43) Veröffentlichungstag der Anmeldung: **15.10.2008**
(21) Anmeldenummer: 07007501.5
(22) Anmeldetag: 12.04.2007
(51) Int. Cl.: A47J 43/07, B25F 3/00

(54) **Multifunktioneller Handmixer mit Akku-Betriebe, Einsatzstäbe und Abdeckhauben mit Kennung**

(71) Anmelder: Oeschger, Verena, 4402 Frenkendorf (CH)
(72) Erfinder: Oeschger, Verena, 4402 Frenkendorf (CH)

(57) **Zusammenfassung**

Küchenmixer mit Akkumulatorbetrieb, Mixerstab 10 cm lang. Pistolengriff, stufenloser Drehzahlregler bis 25'000/Min., automatische Programmierung der Drehzahlmaxima oder Motorleistung durch Arbeitsstäbe und Mixerhauben entsprechend Gefährlichkeitsstufe. Leistung 50 - 200 Watt. Mechanische und elektronische Schutzmassnahmen. Ladestation.
Ungefährliche Arbeitsköpfe laufen ohne Schutzhaube, aber nur bis zu einer Basistourenzahl von ca 7000 Touren/Min., erst mit einer passenden Abdeckhaube wird das Drehzahlmaximum angehoben. Mixermesser, Schlagscheiben und Quirlscheiben mit peripherer zirkulärer Schutzverstärkung 1. Kurze Rühr- und Schlagstäbe. Anwendung aller Arbeitsköpfe in normalen soliden Gefässen von 0.1-5 Liter. Bei Spritzgefahr Plastikdeckel mit zentraler Perforation, für grosse Gefässe Abdeckhauben. Auswechselbare Funktionshauben mit teils fix montierten, teils mit wählbaren Arbeitsköpfen. Variierte Hauben als Pürierhauben oder Mahlhauben.

**Verwendungszweck:** Mixen, Rühren, Quirlen, Hacken, Mahlen, Pürieren, für Saucen, Mayonnaise, Desserts und Eiscremes in mittleren und kleinen Mengen. Verarbeitet Kräuter, harte Gemüse wie Meerrettich, Peperoncini uä., Früchte, Käse, Nüsse, mahlt Getreide, Änis uam., halbflüssige und leichte Teige. Minimaler Reinigungsaufwand. Minimaler Verlust von Materialresten. Sofortige Betriebsbereitschaft, leicht, ergonomische Handhabung unter Sichtkontrolle.

## Beschreibung

### Einleitung

Die elektrischen und mechanischen Geräte für das Zerkleinern von Nahrungsmitteln, Kräutern und Gewürzen und die Zubereitung von Saucen, Cremes und Desserts etc. in mittleren und kleinen Mengen verursachen zu viel Reinigungsarbeiten an Gerät und Gefässen oder funktionieren erst bei grösseren Mengen. Viel Mixgut geht in Form von anhaftenden Resten verloren. Viele Geräte sind nur für einen einzigen Zweck nutzbar. Ziel war eine Verbesserung des Verhältnisses von Aufwand und Ertrag und die Entwicklung eines leichten, möglichst multivalenten Gerätes mit einfacher Handhabung, Arbeiten unter direkter Sichtkontrolle in geschlossenen wie in offenen Gefässen und sparsamer, gezielter Energienutzung gerade so viel wie nötig, unter Vereinfachung und Verbesserung der Sicherheitsmassnahmen, falls erwünscht unter Nutzung neuester digitaler Technik. Nicht geeignet für zähe Teige, auch nicht als Antriebsgerät für Slicer oder andere Maschinen empfehlenswert.

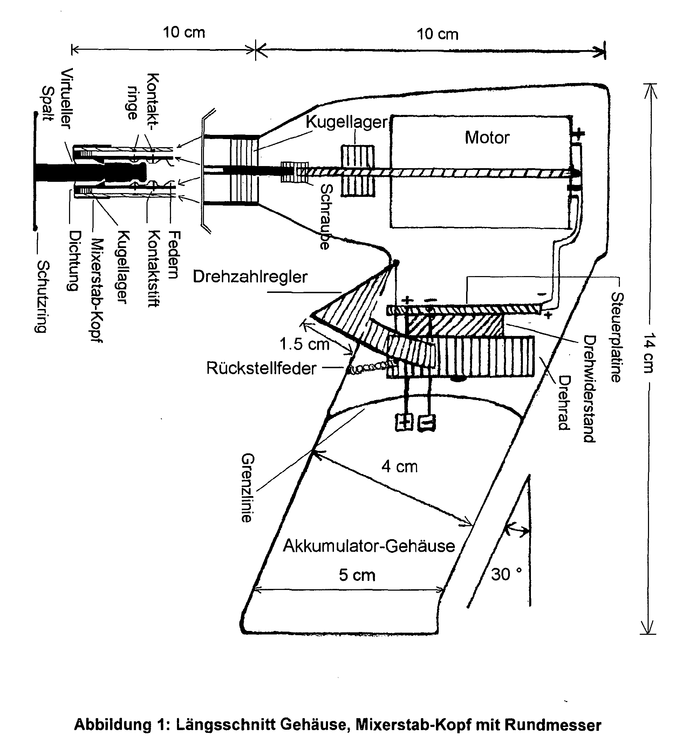

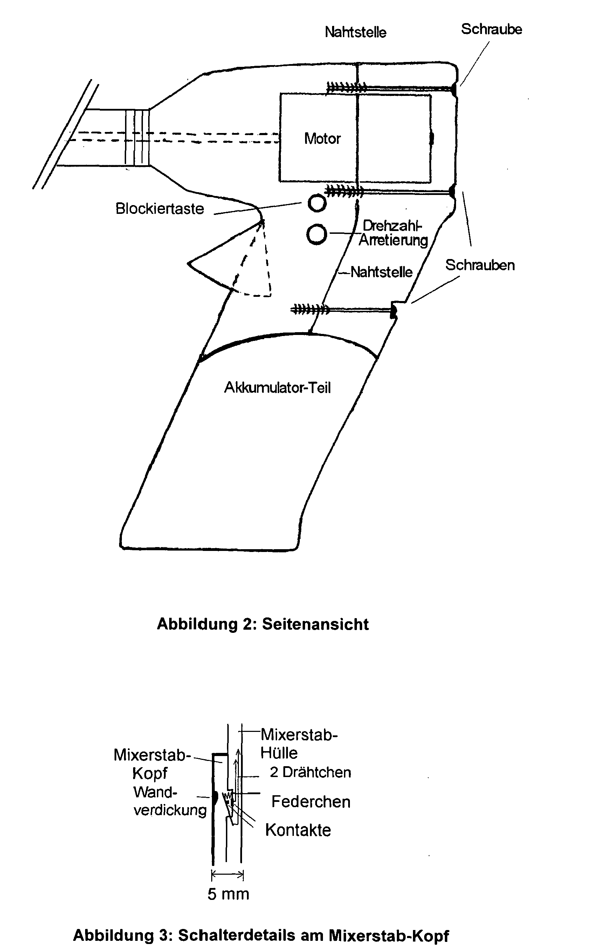

**1. Mixergerät** von maximal 500g, äusserlich wie Elektro-Bohrgerät, axiale Länge ca 10 cm, ca 5 cm im grössten Durchmesser. Fix verbundene oder solid andockbare Kraftübertragungswelle mit Schutzhülle, im folgenden Mixerstab genannt, von ca 10 cm Länge und einem Durchmesser von ca 15 mm, rund oder leicht oval. Nach vorne geneigter oder neigbarer Pistolen-Handgriff von ca 9 cm Länge, fix oder einrastbar bei ca 60° bis ca 120°. Gesamthöhe ca 14 cm (Abb. 1 und 2).
- Das Mixerstab-Ende hat einen Kopfabschluss, der etwas grösser als der Stab selber ist und zum Aufstecken der Hauben mittels Einrastsystem dient. Er enthält Minischalter für die Prüfung der Wahl der richtigen Deckhaube. Die Arbeitsstäbe weisen am Stabende eine schlüsselähnliche Identifikationsformung auf, welche beim Einstecken die jeweilige Maximaldrehzahl einstellt. Isolierte Drähtchen im Mixerstab. Eintauchtiefe über 10 cm. (Abbildungen 1, 3, 4, 5).
- Kabellos, mit auswechselbarem Lithiumionen- oder NiMH-Akku im Handgriff, 6 - 12 Volt. Ladekontakte hinten innerhalb des Gehäuses bei den Lüfteröffnungen. Akku-Ladestandslampen leuchten bei eingeschaltetem Mixer.
- Stufenlose Drehzahlregelung am Pistolengriff, spritzwassergeschützt, mit Arretierknopf. Daneben Blockierknopf für Motor, gleichzeitig elektrisch und mechanisch. Tourenzahl von 1000/Min. bis ca 25'000/Min., elastischer Motor, tiefes Drehmoment, Leistung ca 50 - ca 200 Watt, 6-12 Volt Spannung. Die stufenlose Steuerung, die vom verwendeten Zubehör geschaltete jeweilige maximal erreichbare Drehzahl oder elektronische Steuerung anderer Motorcharakteristika, die Elastizität des Motors und die Formanpassung der Arbeitsstäbe wie auch der Hauben erlauben den Verzicht auf ein Übersetzungsgetriebe.
- Je nach Sicherheitsanforderungen oder Wunsch der Käufer elektronische Sperren wie Fingerabdruck-Panel, Codesystem oder andere Kindersicherung nachrüstbar, ebenso zusätzliche Schalldämpfungsmassnahmen.

**2. Diverse Zubehörstäbe (Abbildungen 6, 7) und auswechselbare Deckhauben (Abbildungen 8, 9):** Im einfachsten Fall benötigt man nur die Schlag- und Quirlscheiben, die Rühr- und Quirlstäbe, und zwei oder drei auswechselbare Abdeckhauben und Pürierhauben. Die vorliegende Kombination von Gerät und neuartigem Zubehör eröffnet aber ein weites Feld an Wahlfreiheit, unter Verbesserung der Sicherheit.

Das freie Ende der Arbeitsstäbe löst beim Einstecken Impulse aus, sodass die damit erlaubte Maximaltourenzahl des Gerätes in Funktion von der Gefahrenklasse des Arbeitsstabes festgelegt wird, ca 5 Stufen scheinen sinnvoll, von ca 5000 bis ca 25'000 Touren/Min. Das freie Ende des Arbeitsstabes hat einen Abschlusskopf, dessen Hals unterschiedlich lang ist, so dass die Maximaldrehzahl von den Stäben mit dem längsten Hals programmiert wird. Die Abdeckhauben schützen vor Spritzern, Verletzungen und vor Kontakt mit den Gefässwänden und bieten ausgeprägte Funktionsverbesserung bei einigen speziellen Hauben. Deswegen sind die Hauben leicht auswechselbar durch Einklinken am Mixerstab-Ende, und von verschiedener Form und Grösse.

In Verbindung mit dem Stufensystem der Arbeitsstäbe ist damit ein Feld für freie Gestaltungsmöglichkeiten eröffnet, auf dem sich die geltenden Sicherheitsbestimmungen gut erfüllen lassen. Einige Hauben können mit passenden Arbeitsstäben frei kombiniert werden und erlauben mittlere bis maximale Drehzahlen, einige Arbeitsstäbe verlangen eine bestimmte Haube, oder der Motor wird blockiert, einige Hauben haben fix eingebaute Arbeitsstäbe und erlauben mittlere oder Maximaldrehzahl.

**Arbeitsstäbe**: 2 - 5 cm lange, ca 3 mm dicke, leichte Edelmetallstäbe mit Arbeitskopf und Einsteckende mit Identifikationsformung. Bei den Schlag- und Quirlscheiben Länge bis ca 8 cm je nach Sicherheitsvorschriften. Gewicht ca 5 - 25 g.

**Hauben**: Höhe 3 - 6 cm, Durchmesser 3 - 6 cm, Deckenteil meist flache Wölbung, Gestaltung der zirkulären Aussenwand sehr verschiedenartig, oft nur aus 3 oder 4 Stäben bestehend. Einrast-Vorrichtung, Lösen mit Drehen der Haube, oder mit Löseknopf vom Pistolengriff aus.

**2.1 Arbeitsstäbe mit Programmierung der Maximalgeschwindigkeit:** der Arbeitsstab schaltet je nach Länge seines Halses die maximal erreichbare Basistourenzahl von ca 5000 Touren/min. stufenweise höher bis maximal ca 25'000 Touren/min., je nach Gefahrenklasse oder auch Grösse des Arbeitsstabes, indem beim Einklinken oder Entfernen der Stäbe 0 bis mindestens 5 funktionssichere, gegen Feuchtigkeit und Hitze resistente Minischalter betätigt werden.

Die Impulse werden zur Steuerplatine weitergeleitet, gespeichert und programmieren dort die maximal erreichbare Tourenzahl. Die Tourenzahl bleibt dabei am Drehzahlregler bis zum jeweiligen Maximum stufenlos regulierbar. Arbeitsstäbe der niedersten Gefahrenklasse dürfen ohne Abdeckhaube laufen, aber nur bis zur Grundgeschwindigkeit von ca 5000 - 7000 Touren/Min., gefährliche Arbeitsinstrumente blockieren den Motor, wenn nicht eine vorgeschriebene Haube aufgesteckt wird, und können mit Haube dann bis zur Höchsttourenzahl benutzt werden. Stärkere Motormodelle reagieren auf die Schaltimpulse in einer Weise, die den grösseren Gefahren Rechnung trägt, sodass die selben Hauben und Arbeitsstäbe bei verschiedenen Modellen verwendet werden können.

**2.2 Abdeck-Hauben, auswechselbar, mit Erkennungssystem:** Grundprinzipien sind die leichte Auswechselbarkeit der Hauben, gerade weil an den Hauben viel Funktionalität hängt, und die Identifizierung der Haube beim Fixieren am Mixerstab-Ende durch die automatische Betätigung von 1 bis mindestens 4 Minischaltern am Mixerstab-Ende, wobei 1 Schalter für den richtigen Sitz der Haube reserviert ist. Identifizierung mit Sensor wahrscheinlich machbar. Die Hauben sind aus Metall oder solidem Kunststoff oder aus einer Kombination von beidem, wo möglich transparent, sie rasten aussen an der Mixerstab-Spitze solid ein, und durch eine kräftige kurze Drehung aus, Löseknopf am Pistolengriff ebenfalls möglich.

Es gibt Hauben ohne fixe Arbeitsstäbe, und Hauben mit fix eingebauten Arbeitsstäben. Die mit einem Arbeitsstab fix versehenen Hauben können aussen erst einrasten, wenn der aufsteckbare Arbeitsstab innen an der Mixerwelle richtig fixiert ist. Erst das richtige Einrasten der Hauben betätigt einen oder mehrere Minischalter im Mixerstab-Ende und ändert oder bestätigt in Verbindung mit den Stäben die definierte Maximaltourenzahl, oder blockiert den Motor bei unerlaubten Kombinationen. Display-Meldungen sind denkbar, die die Art der erlaubten oder zweckmässigen Kombination von Arbeitsstab und Haube angeben. Grösse und Form der Hauben je nach Einsatzzweck.

**Haubenformen:** a) im Minimalfall flache Scheibe; b) mit zirkulärer geschlossener Wand c) flache Wölbung mit 3 oder 4 mehr oder weniger grossen peripheren, türförmigen oder torförmigen Aussparungen, oder zirkulär angeordneten vertikalen Stäben. Hauben und Arbeitsköpfe können passend, also in Grenzen frei kombiniert werden, je nach Sicherheitsvorschriften. Leicht elastischer Deckel mit radialem Spalt, zum Plazieren ohne Abnehmen des Arbeitsstabs oder der Haube, als Schutz vor Spritzern, mit stielartiger, abnehmbarer Verlängerung zum Griff des Mixergerätes, zum Festhalten oder Einrasten.

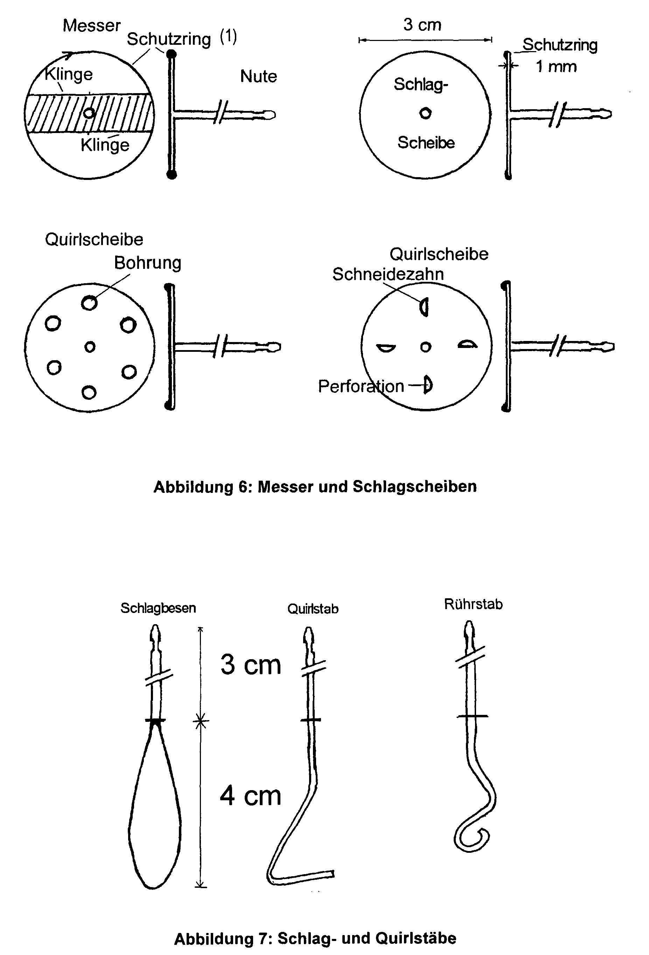

**2.3 Mixermesser mit zirkulärem Schutzring** (Abb. 6): Zwei- bis drei-flügelig, Klinge maximal 1.7 cm breit je nach Funktion, mit leichter Propeller-Formung, scharfe und robustere Ausführung, Durchmesser ca 1.0 cm bis 4.5 cm. Peripherer zirkulärer Ring an Messern als Schutz vor Verletzungen von Haut und Arbeitsgefäss, so schmal wie möglich, so breit wie nötig. Je nach Sicherheitsvorschriften fix in Abdeckhaube eingebaut und dann mit voller Drehzahl von 25'000 Touren/min., oder mit passender Wahl der Abdeckung, mit der die Drehzahl ebenfalls ganz oder teilweise nach oben frei gegeben wird.

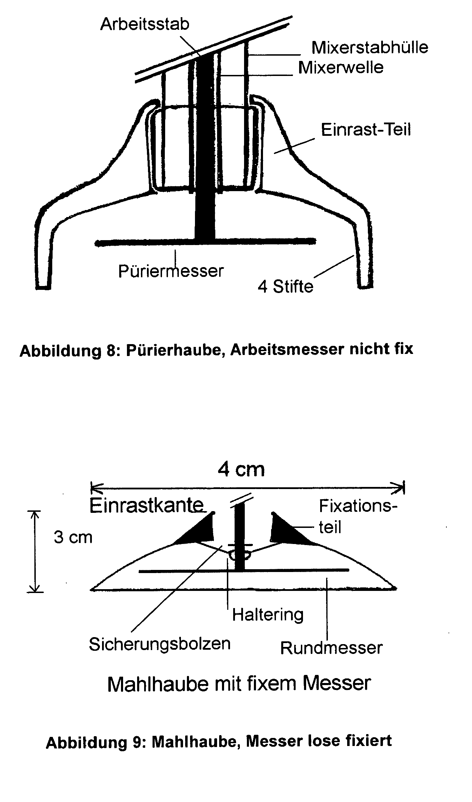

2.4 Pürieraufsatz (Abb. 8): auswechselbar, Haube mit fix eingebautem Messer ohne Schutzring, rastet am Mixerstab-Ende sowohl an der Welle wie auch aussen am Metallende ein. Länge ca 2 - 5 cm, proportional zum Durchmesser. Verschiedene Grössen bis ca 4 cm Messer-Durchmesser für diverse Einsatzmöglichkeiten. Zusätzliche Haube mit fix montiertem Multimesser mit horizontaler und vertikaler Wirkung, auch für harte und grobe Esswaren. Volle Drehzahl bis 25'000 Touren/min. Leichte Versionen mit vom Deckenteil ausgehender Metall- oder Plastikhalterung, die den Arbeitsstab zwischen Arbeitskopf und einem zusätzlichen Querbolzen oder Ring locker und im eingesteckten Zustand berührungsfrei so umfasst, dass der Stab nicht ausgewechselt werden kann. Die Halterung kann schmal sein, oder eine durchgehende Decke bilden, wenn für die Funktion von Vorteil.

**2.5 Schlagscheibe und Quirlscheiben** (Abb. 6). Alle Scheiben ca 1.0 - 2.5 mm dick, ca 1.5 - 4.2 cm Durchmesser, die Scheiben ohne Schutzring je nach Sicherheitsvorschriften nur mit kurzem Schaft von 2-5 cm. Scheiben mit Schutzring dürfen einen bis ca 8 cm langen Schaft haben. Periphere zirkuläre rundgeschliffene Verdickung als Schutz für Haut und Gefässe. Alternativ ist die ganze Scheibe verdickt mit rundgeschliffenem Aussenrand. Schutzvorrichtung nur nötig bei offener Verwendung ohne Abdeckungen oder bei langem Schaft, je nach Sicherheitsvorschriften. Vielfalt an Formen möglich, insbesondere Längsformen.

Schlagscheibe: Leichte Propeller-Verdrehung. Für Schlagrahm, Eiweiss, halbflüssige Teige etc. **Quirlscheibe:** 2 - 6 periphere Perforationen. Für Mayonnaise, Saucen, Shakes, Cremes, halbflüssige Teige usw. Quirlscheib: 2 bis 6 Raspel-Höcker bzw. -löcher. Für Mayonnaise, Saucen, Shakes, Cremes, Eiscrèmes mit Früchten. Eintauchtiefe bis ganze Länge des Mixerstabes möglich.

2.6 Konventionelle Rührstäbe (Abb. 7): Wie bei den längerschaftigen Varianten der Schlag- und Quirlscheiben nur bis Basisdrehzahl benutzbar. Die Rührstäbe können bei Bedarf natürlich bis zur ganzen Mixerschaftlänge eingetaucht werden. Vielfalt von Stäben möglich.

**Schlagbesen-Stab,** 1 oder 2 evtl. leicht schraubenförmige Spangen von ca 3 - 5 cm axialer Länge, Gesamtlänge mit Stab maximal ca 8 cm. Zum Einrühren an Stelle der Scheiben, oder für bspw. Kartoffelstock (Kartoffelpüree). **Quirlstab,** am Ende wie eine Sieben oder ähnlich geformt, maximaler Durchmesser ca 0.5 - 1.5 cm, maximale Gesamtlänge ca 5 cm. **Rühr-Stab,** Schraubung entgegen Umlaufrichtung, maximal ca 5 cm Gesamtlänge.

### 3. Gefässe (keine Abbildungen)

3.1 Solide Gefässe aus Glas, Metall, Kunststoff oder Keramik: Durchmesser ca 2 - 7 cm, Höhe variabel ca 3 - 12 cm, ähnliche Gefässe kommerziell erhältlich. Zum Schutz vor Spritzern dienen Plastikdeckel, vorzugsweise transparent, mit zentraler Perforation von der Grössenordnung des Mixerstabes. Gefäss ca 2 dl passend zu Haube bspw. Abbildung 9, wobei der Innendurchmesser des Gefässes knapp grösser als Aussendurchmesser der Haube ist, sodass Haube im Gefäss vertikal bewegt werden kann. Für Körner, Gewürze und andere trockene Esswaren flache Haube mit Rippen, höhere Haube für bspw. Käse, Nüsse, flüssige oder gemischte Esswaren. Glas erlaubt gegenüber anderen Materialien noch bessere Sichtkontrolle, wie weit die Verarbeitung der Esswaren ist.

Der Plastik bzw. die Glasur von Schüsseln und ähnlichen Gefässen muss wie bei konventionellen Rührmaschinen abriebfest sein, wenn Scheiben oder Quirlstäbe ohne Abdeckung verwendet werden sollen. Für die haubengeschützten Varianten ist praktisch keine Einschränkung nötig.

### 4. Lade- und Aufbewahrungsstation

Mixer kann eingeklinkt werden. Zum Laden am Ladegerät Kontakte zuklappen, womit das Ladegerät eingeschaltet und beim Aufklappen ausgeschaltet wird. Die Kontaktstellen sind innen im Bereich der Lüftungsöffnungen. Kontrolllampen an Ladestation. Zubehör-Halterung.

**Sicherheitsaspekte:** Das Gerät ist gegen unerwünschte Vibrationen geschützt, die Schutzhülle des Mixerstabes ist wasser- und hitzeresistent und erlaubt das volle Eintauchen auch in heisse Pfannen. Die Länge der Arbeitsstäbe kann auf ein Minimum reduziert werden. Das Wegfallen von Netzkabel, Transformator und Schaltgetriebe und die genaue Steuerbarkeit des Motors am Drehregler, sowie die Begrenzung der Maximaldrehzahl oder anderer Motorcharakteristika in Abhängigkeit vom jeweils eingesteckten Arbeitsstab und der eventuell angesteckten Abdeckhaube bilden wichtige, teilweise neue Sicherheitselemente. Dank des kleinen Drehmoments können die freiliegenden Stäbe notfalls von Hand angehalten werden. Die bisherigen Schutzvorrichtungen, die das Reinigen kompliziert und aufwändig machen, können stark reduziert werden, da die Leichtigkeit der Schutzelemente selber ein Schutzelement ist. Es handelt sich bei diesen Überlegungen um die idea sine qua non der Erfindung.

Alle gefährlichen Arbeitsköpfe, besonders die Messer ohne Schutzring, können in passenden Abdeckhauben fix eingebaut oder in obligater Kombination mit definierten Abdeckhauben verwedet werden und dadurch volle Tourenzahl erreichen. Nur weitgehend ungefährliche Arbeitsköpfe dürfen ohne Hauben verwendet werden, sie laufen aber nur bis zur Basisdrehzahl. Der Schutzring bei den Messern erfüllt kaum alle nationalen Sicherheitsvorschriften, und ihre Verwendung ist wahrscheinlich nur mit fixem Einbau in Deckhauben oder mit zwingender Verwendung definierter Hauben durchsetzbar, mit dem Gewinn an höherer Maximalgeschwindigkeit. Offene Scheiben mit oder ohne zirkuläre Verdickung als Schutz gegen Verletzung von Gefässen und Haut sollten die Vorschriften erfüllen, auch die Versionen mit längerem Stiel, da die Maximaldrehzahl tief bleibt. Die Sicherheitsbestimmungen müssen für dieses Gerät wahrscheinlich noch spezifiziert werden.

Neuere Technik wie Fingerabdruck-Erkennung mit speziellem Pannel, Code-Systeme oder andere Kindersicherungssysteme können auf Wunsch nachgerüstet werden.

### Kommentare zu den Abbildungen

**Abbildungen 1, 2, 3,** Abbildungen S. 1: Längsschnitt durch Antriebsgerät. Die aus Metall gefertigte Ei-ovale Spitze am Ende des Mixerstabes bildet eine Verstärkung, eine Abdichtung und die Andockstelle für die Hauben. Sie wird von unten montiert, zwecks Reparatur und Reinigung entfernbar mittels Spezialwerkzeug. Die Spitze enthalt mindestens 3 funktionssichere, korrosionsgeschützte Minischalter, die beim Aufstecken der Hauben je nach Typ der Haube auf on oder off schalten, indem die den Minischaltern aussen anliegende Stelle dem Druck der entsprechenden Haubenstelle elastisch nachgibt, Detail in Abbildung 3. Die zu den Schaltern gehörigen Drähtchen verlaufen in der Mixerstab-Aussenwand ohne Kontakt zur Kraftwelle. Zwei Kugellager zwischen Motor und Wellenende. Kopplung Mixerstab zu Arbeitsstäben: die Antriebswelle ist hohl, hat im kritischen Bereich mehrere dünne Längsschlitze, vier der Längsteile sind mit nach innen vorragenden Zähnen so versehen, dass die Zähne beim Hochschieben des Arbeitsstabes auseinandergedrückt werden, und dann an einer Ringkerbe einrasten, sobald die leicht oval geschliffene ca 2mm breite Zone oberhalb der Kerbe des Stabes passgenau in die oval geformte Zone des Hohlstabes hochgedreht wird. Zum Einführen und Herausziehen der Stäbe muss der Blockierknopf gehalten werden. Entfernen der Stäbe durch Drehen in Motordrehrichtung, wodurch die 4 Zähne durch den ovalen Teil des Stabes nach aussen gedrückt werden und den Stab freigeben. Selbstrückstellender Drehzahlregler, statt Drehwiderstand alternativ Schiebewiderstand. Überlastschutz in der Steuerplatine integriert.

**Abbildung 2****,** Abbildungen S. 2: Seitenansicht von Aussen. Gehäuseschale aus 2 Teilen zusammengeschraubt, Teilungsbereich hinter der Mitte oder oder ganz hinten, nicht längs. Welle mit Kugellagern, Motor und Reglereinheit können ohne Schrauben direkt im entsprechend gestalteten Gehäuse eingesetzt werden, definitive Fixierung beim Aufschrauben der Rückwand. Das Akkumulatorteil ist aus einem Stück und wird von oben montiert, ohne sichtbare Schrauben wenn eingesetzt. Akkumulatorteil kann am Griff eingesteckt werden, durch Drücken an 2 Stellen am Pistolengriff löst sich Einrastung. Pistolengriff hier nur in fixer, leicht nach vorne geneigter Variante gezeichnet.

**Abbildung 3****,** Abbildungen S. 2: Details der Schalter am Mixerstab-Kopf. Der Kopf wird von unten wasserdicht montiert. Die im Mixerstab-Ende vormontierten Federstift-Kontakte kommen dabei unter jeweils einen definierten elastischen, mit einem kleinem Höcker verstärkten Bereich der Kopf-Aussenschale zu liegen. Beim Aufstecken einer Abdeckhaube werden einer oder mehrere dieser Kontaktstifte nach innen gedrückt und melden damit der Kontrollplatine den Typ der Abdeckhaube. Der obere Teil des Mixerstab-Kopfes ist leicht oval, der untere Teil rund. Die Hauben können also nur auf vorgegebene Weise aufgesteckt werden.

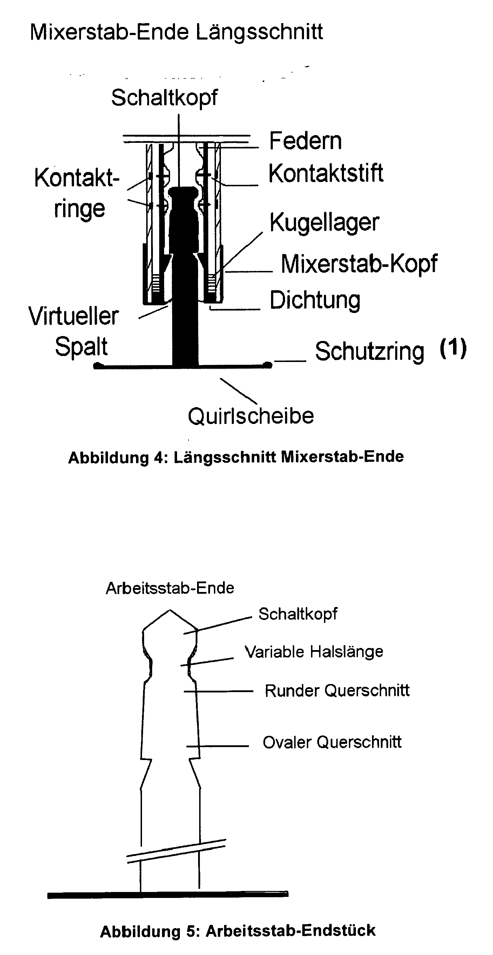

**Abbildung 4 und 5****,** Abbildungen S. 3: Im hohlen Teil des Mixerstabes nur 2 Kontaktstifte gezeichnet, Abstand ca 2 mm, bis mindestens 5 Kontaktstifte möglich. Die breiteste Stelle des Schaltkopfes ist nur ca 1 mm lang. Der ca 5mm lange Haltekopf des Arbeitsstabes ist angrenzend an den Halsbereich für ca 3 mm lang rundgeschliffen, zu der Einrastkerbe hin flacht er sich zu einem leichten Oval ab, mit diesem Ovalteil werden beim Entfernen die Einrastzähne nach aussen gedrückt. Der Hohlstab ist passgenau geformt und lässt das Herausdrehen des Arbeitsstabes nur in der Drehrichtung des Motors zu.

**Abbildungen 6 und 7,** Abbildungen S. 4: Diverse Arbeitsstäbe zum Schneiden, Mahlen (mit Messer), Rühren, Mixen, in neuerer Scheibenform und in klassischer Ausführung. Form des Schutzrings beim Messer 1 und bei den Scheiben in verschiedener Ausführung möglich; dabei ist zu beachten, dass auch hier die Leichtigkeit des Rings selber Schutzelement ist und die Härte von allfälligen Schlägen gegen Glas- oder Keramikgefässe vermindert.

**Abbildung 8****,** Abbildungen S. 5: Ebene oder leicht gewölbte Deckel mit und ohne Randwand, höhere Hauben für Flüssigkeiten oder Mischungen von Flüssigkeiten und harten Gemüse- oder Früchteteilen in offenen Gefässen wie Pfannen.

**Abbildung 9****,** Abbildungen S. 5: Mahlhaube im Querschnitt. Flache Haube, allenfalls mit Rippen, damit harte, trockene Mixmaterialen (Körner, Nüsse, Käsestücke und Ähnliches) beim Anprallen gebremst und wieder in den Messerbereich zurückgeleitet werden. Hier das Beispiel eines fix eingebauten Arbeitsstabes: ein Metallteil oder eine schmale oder vollständige Kunststoffabdeckung umfassen den Arbeitsstab zwischen dem Arbeitskopf und einem Querstift so, dass das Trennen von Arbeitsstab und Haube verhindert wird. Das Metall- oder Kunststoffteil bleibt ohne Kontakt zu Stab und zu Querstift, wenn Stab und Haube aufgesteckt sind. Mit dieser Bauart lässt sich die Haube leicht reinigen.

### Stand der Technik

Stand der Technik sind hochtourige Elektromotoren mit und ohne Übersetzungsgetriebe, meist Netzanschluss, seltener Akku-Betrieb, elektronische Steuerung der Motoren, Standmixer, Stabmixer, Akkumulator und Ladestation, ebenso Mixermesser, Multimesser, Pürierstäbe, Quirlstäbe, Rührstäbe, Schlagscheiben und Quirlscheiben, Milchschäumer. Dazu viele mechanische Geräte für verschiedenste Anwendungen.

Patente: GB770949A, ESGE 1957 für Mixer mit Schlagmesser und Schlagscheiben. Bosch Pat. 722170 1958 für Kombi-Handmixer, US4575255 Akku-betriebener Multiquirler.

**Probleme:** Die bisher verwendeten Elektromotoren und Gerätegestaltungen verlangen aufwändige Sicherheitsvorkehrungen. Die Messerabdeckung, in der Folge Haube genannt, ist meist fix montiert. Das alles macht die Geräte und das Zubehör gross, schwer, unhandlich, sie sind schwierig zu reinigen, viele Essreste gehen verloren. Auch die mechanischen Geräte machen bei kleineren Mengen mehr Reinigungsarbeit als sie Arbeit einsparen. Die durchschnittliche Haushaltgrösse hat weltweit stark abgenommen, die zu verarbeitenden Essmengen sind damit kleiner geworden.

**Lösungen**: Vereinfachung der Apparate und Neugestaltung des Zubehörs. Die auf Funktion und Sicherheit zielenden Vorkehrungen sind 1. Dosierte Motorleistung mit tiefem Drehmoment, hoher Elastizität und hoher Maximaldrehzahl, 2. stufenlose Steuerbarkeit am Drehzahlregler, 3. automatische Schaltung auf jeweils eine von mindestens 5 Maximaltourenzahl-Stufen, wobei die Schaltung von der langsamen Basistourenzahl auf höhere Maximaldrehzahlen durch das Kennungssystem der Stäbe und Hauben bewirkt wird. Schaltung anderer Motorcharakteristika zusätzlich möglich. 4. Gewichtsreduktion durch das Entbehrlichwerden von Netzteil und Schaltgetriebe. 5. ergonomische Form und Kabelunabhängigkeit. 6. Vor allem die Arbeitsköpfe sollen leicht sein, die Stäbe eventuell hohl, aber mit geschlossenen Enden. 7. Abdeckung der gefährlichsten Arbeitsköpfe mit einer Haube, in welche der Arbeitskopf fest integriert ist. 8. Einige Messer haben einen schützenden Aussenring 1, Schlagscheiben und Quirlscheiben eine leichte Verdickung am Aussenrand 1 oder eine gewisse Mindestdicke mit rundem Aussenschliff. Die Schlag- und Quirl-Scheiben können wegen minimaler Gefährlichkeit etwas längere Stiele haben und wie die Schlag- und Quirlstäbe ohne Haube, dafür nur mit der Basistourenzahl eingesetzt werden wegen der Vibrationen bei hohen Drehzahlen. Die Spritzgefahr ist vor allem bei den Scheiben gering. Die Vorschrift von Hauben für die Scheiben ist eine Frage der Sicherheitsbestimmungen, die aber auch den Stand der Technik berücksichtigen.

Der Reinigungsaufwand ist gering, auch die Hauben sind besser zu reinigen, weil sie sich entfernen lassen. Das Gerät mit seinem Zubehör erlaubt eine breite und tägliche Anwendung in der Küche. Man kann die Arbeit der Stäbe gut beobachten und regulieren, was eine grössere Raffinesse erlaubt. Die Gefahrenstufe entspricht etwa der von Küchenmessern.

## Patentansprüche

1. **Patentanspruch:** für einen kabellosen Küchenmixer, **gekennzeichnet durch** einen wiederaufladbaren Akkumulator im Pistolengriff, wahlweise Lithium-lonen oder Nickel-Metallhydrid, stufenlose Drehzahlregelung mit Arretiermöglichkeit, Drehzahl von ca 1000 bis 25'000 Touren/Min., tiefes Drehmoment, Leistung 50-200 Watt, Gewicht ca 500 g. Neben dem Knopf zum Arretieren der Drehzahl weiterer Knopf, um den Motor elektrisch und mechanisch zu blockieren, für sicheres Wechseln der Arbeitsköpfe und Hauben. Weitere Kennzeichen: Ausführungen mit Pistolengriff von ca 5 cm Durchmesser, Neigung nach frontal um ca 30° oder rechtwinklig. Geräteausführung wahlweise mit einrastbaren Griffpositionen. Gerät selber ca 10 cm lang, maximaler Durchmesser ca 5 cm. Gehäuse vorwiegend aus Kunststoff. Der eintauchbare, hitze- und feuchtigkeitsresistente Mixerstab von ca 10 cm Länge und ca 12 mm Durchmesser ist aus Kunststoff und nahtlos mit dem Gehäuse verbunden, oder aus Metall und fest einklinkbar mit dem Gehäuse verbunden. Der Mixerstab enthält die kugelgelagerte und mindestens im unteren Teil hohle Kraftübertragungswelle und isolierte Drahtleitungen.
Weitere Kennzeichen sind eine äussere Öse im oberen Bereich der Lüftungsöffnungen zum Aufhängen an einer Wand. Wenige seitliche Gumminoppen zum Schutz vor Nässe und Kratzern beim Ablegen und Aufhängen des Gerätes. Montage von hinten, Motor und Halterungen werden **durch** Aufschrauben der Rückwand im Gehäuse solid verankert. Akku-Teil mit Einrast-Verbindung von unten her. Ladekontrolllampen beim Einschalten des Gerätes auf on. Ladekontakte innerhalb des Gehäuses in den Lüftungsöffnungen, wo auch Geräuschdämmung und Spritzerschutz angebracht sind.

2. **Patentanspruch:** für eine Befestigungsvorrichtung und ein Identifikationssystem am Schaftende der Arbeitsstäbe, also der Mixermesser, Schlagscheiben usw., erfindungsgemäss **dadurch gekennzeichnet, dass** sie einen gegen das Schaftende hin zuerst ovalen, dann runden Haltekopf mit einer zirkulären Einrastkerbe beim ovalen Stück haben, und erfindungsgemäss weiter **dadurch gekennzeichnet dadurch**, dass sie am Ende des Schaftes einen kürzeren oder längeren Hals und zuletzt einen kurzen Kopf zum Betätigen der erfindungsgemässen Federschalter auf unterschiedlicher Höhe in der umgebenden Mixerwelle haben, so dass anhand der ausgelösten Stromimpulse der Arbeitsstab identifiziert wird, und die Kontrollplatine die programmierbare Regelung des Motors danach richten kann. Zusätzlich Anpassungen durch die Impulse allfällig aufgesteckter Abdeckhauben. Entsprechend ist die Kraftwelle **dadurch gekennzeichnet, dass** sie im unteren Abschnitt hohl und mit 8 dünnen Längsschlitzen von ca 3 cm Länge versehen ist, so dass 4 breitere und 4 schmalere Metallstreifen entstehen. Die schmaleren rasten mit Zähnen in der dafür vorgesehenen zirkulären Einrastkerbe der Arbeitsstäbe ein und können zum Lösen durch Drehen des leicht ovalen Haltekopfes aufgedrückt werden. Nur bei blockiertem Motor und nur in einer Richtung möglich.

3. **Patentanspruch:** für einen Abschlusskopf am Ende des Mixerstabs, erfindungsgemäss **gekennzeichnet durch** ein Identifikationssystem für die Abdeckhauben mittels einigen unter der Aussenhülle des Abschlusskopfes eingebauten Minischaltern, die **durch** die auswechselbaren Abdeckhauben beim passgenauen Einrasten betätigt werden, und **gekennzeichnet dadurch, dass** der Kopf oben leicht Ei-oval ist, und nach unten zu rund wird. Lösen der Hauben durch Drehen, womit die eingerasteten Zähne der Hauben infolge der ovalen Form gelöst werden. Wasserdichte Montage des Abschlusskopfes von unten her, entfernbar durch einfaches Spezialwerkzeug im Falle von Reparatur oder Reinigung.

4. **Patentanspruch:** für auswechselbare Abdeckhauben, insbesondere Pürier- und Mahlhauben verschiedener Grösse, Form und Funktion, erfindungsgemäss **gekennzeichnet durch** Auswechselbarkeit mittels Einrast-Mechanismus, und erfindungsgemäss **gekennzeichnet durch** ein ldentifikationssystem mittels kleiner Druckflächen innen am Fixationsring der Hauben, welche auf Minischalter unter elastischen Bereichen des Abschlusskopfes drücken. Diese Identifikation, zusammen mit dem erfindungsgemässen ldentifikationssystem der Arbeitsstäbe, erlaubt der Kontrollplatine eine Steuerung des Motors, oder blockiert ihn im Falle ungeeigneter oder gefährlicher Kombinationen von Hauben und Arbeitsstäben.
Es gibt erfindungsgemäss Hauben mit einem fest montierten Arbeitsstab, erfindungsgemäss **gekennzeichnet durch** einen in der Haubendecke einseitig oder beidseitig verankerten kurzen Metallstab oder Plastikteil oder kompletten Plastikdeckel, der den Arbeitsstab zwischen aktiven Ende und einem kurzen Querbolzen oder Ring knapp unterhalb der Ausstrittstelle aus dem Mixerstab-Ende im Arbeitsstab so umfasst, dass der Arbeitsstab nicht entfernt werden kann, und dass der Bolzen mit dem Arbeitsstab nicht in Berührung ist, wenn dieser und die Haube eingesteckt sind. Dichtung nur in Spezialfällen nötig. Und es gibt erfindungsgemäss auswechselbare Hauben ohne Arbeitsstab, für die in Grenzen freie Wahl eines passenden Arbeitskopfes wie Mixermesser oder Schlagscheibe.
Weitere Kennzeichen sind ein Durchmesser von 3-6 cm, eine Höhe von 1 - 6 cm, und die verschiedenen Formen wie gewölbt oder flach, mit und ohne Aussenwand, wobei die Aussenwand im Minimalfall aus 3 - 6 starren Stäben von 2 - 8 cm Länge zur Verhinderung des Kontaktes des Arbeitskopfes mit der Haut oder mit den Gefässwänden bestehen kann.

5. **Patentanspruch:** für Mixermesser von ca 1.5 bis 4.5 cm Durchmesser, erfindungsgemäss **gekennzeichnet durch** einen zirkulären peripheren Schutzring von verschiedenartiger Ausführung 1, für offene Anwendung mit Basisdrehzahl, wenn keine Sicherheitsbedenken entgegenstehen, oder mit passender Haube mit höherer oder höchster Maximaldrehzahl. Die Stäbe aus leichtem Edelstahl **gekennzeichnet durch** Dicke von ca 3 mm und Länge von ca 4 - 8 cm. Die Messer **gekennzeichnet durch** eine Dicke von ca 1 mm, eine Breite von 0.5 bis 1.5 cm und leichte Propellerformung, der Durchmesser von ca 1.5 - 4.2 cm.

6. **Patentanspruch:** für Schlagscheiben und Quirlscheiben, erfindungsgemäss **gekennzeichnet durch** eine zirkuläre periphere Schutzverstärkung verschiedenartiger Ausführung 1, die Stäbe aus Edelstahl **gekennzeichnet durch** Durchmesser von ca 3 mm und Länge von ca 3 - 8 cm. Erfindungsgemässes Kennzeichen ist die relativ grosse Länge der Schlag- und Quirlscheiben-Stäbe bis maximal ca 8 cm, weil sie **durch** die automatische Begrenzung des Drehzahlmaximums überhaupt möglich bzw. sicherheitstechnisch erlaubt wird. Damit gehen beim Herstellen von Mayonnaise oder beim Schlagen von Eiweiss oder Rahm usw. nur Mikromengen Material verloren, die Reinigung beschränkt sich auf die Metallscheibe und den dünnen Stab, weil der dickere Mixerstab nicht eingetaucht werden muss.
Die Scheiben sind weiter **gekennzeichnet durch** eine Dicke von ca 1 mm und einen Durchmesser von ca 1 - 4.5 cm. Als erfindungsgemäss kennzeichende Variante können die Scheiben bei genügender Leichtigkeit auch um 2 mm dick und aussen rund geschliffen sein, damit entfällt eine periphere Verdickung. Weiteres Kennzeichen ist die Möglichkeit auch der kurzen Scheiben zur Verwendung ohne Abdeckhaube mit niedrig geschalteter Maximaldrehzahl, oder zur Verwendung mit Haube und hoher Maximaltourenzahl.

7. **Patentanspruch:** für Schlagstäbe, Quirlstäbe und Rührstäbe verschiedener Grösse, Form und Funktion. Ihr gemeinsames erfindungsgemässes Kennzeichen ist die Miniaturisierung, ermöglicht durch die relativ schnelle Drehzahl des Motors und deren automatische Begrenzung durch das stabgeschaltete Drehzahlmaximum. Erfindungsgemässe Kennzeichen ist also eine Länge der eigentlichen Arbeitsteile von 3 - 5 cm, ein Durchmesser von 1 - 3 cm und Ausführungen mit und ohne Stielverlängerung von maximal 3 cm. Ohne Haubenbenutzung nur für Basisdrehzahl, mit langer Haube etwas höhere Maximaldrehzahl.

8. **Patentanspruch:** für einen transparenten Spritzschutzdeckel für alle Arbeitsstäbe, erfindungsgemäss **gekennzeichnet durch** einen radialen Schnitt, der dank der Biegsamkeit des Deckels das Durchführen des 1.2 cm dicken Mixerstabes bis zur zentralen Perforation erlaubt. So kann der Deckel direkt über den Arbeitsstab gehalten werden. Weiteres Kennzeichen ist ein abnehmbarer Haltestab, der ca 20 cm lang ist und am Gerätegriff gehalten oder fixiert wird. Höhe der Haube von 1 - 3 cm und ein Durchmesser von ca 3 - 10 cm.

9. **Patentanspruch:** für die Lade- und Aufbewahrungsstation, **gekennzeichnet durch** die Möglichkeit zur Wandbefestigung oder zum Aufstellen; nimmt Mixergerät oder Akku auch allein auf. Laden des Akku **durch** Zuklappen eines Kontaktteiles auf die Lüfteröffnungen hinten am Mixer, wodurch Ladegerät eingeschaltet, beim Aufklappen ausgeschaltet wird; Mit gleichem Mechanismus Akku allein ladbar; Kontrolllampen. Behälter für Zubehör.
